**Europäisches Patentamt**

**European Patent Office**

**Office européen des brevets**

(11) Numéro de publication : **0 436 431 B1**

(12) **FASCICULE DE BREVET EUROPEEN**

(45) Date de publication du fascicule du brevet :
30.03.94 Bulletin 94/13

(51) Int. Cl.⁵ : **B06B 1/06,** G01V 1/20

(21) Numéro de dépôt : **90403741.3**

(22) Date de dépôt : **21.12.90**

(54) **Hydrophone basse fréquence et antenne sonar comportant de tels hydrophones.**

(30) Priorité : **05.01.90 FR 9000077**

(43) Date de publication de la demande :
**10.07.91 Bulletin 91/28**

(45) Mention de la délivrance du brevet :
**30.03.94 Bulletin 94/13**

(84) Etats contractants désignés :
**DE GB IT**

(56) Documents cités :
**WO-A-86/05350**

(73) Titulaire : **THOMSON-CSF**
**173, Boulevard Haussmann**
**F-75008 Paris (FR)**

(72) Inventeur : **Lagier, Michel**
**THOMSON-CSF, SCPI, B.P. 32950, rue J.-P.**
**Timbaud**
**F-92402 Courbevoie Cédex (FR)**
Inventeur : **Gragnolati, Claude**
**THOMSON-CSF, SCPI, B.P.32950, rue**
**J.-P.Timbaud**
**F-92402 Courbevoie Cédex (FR)**
Inventeur : **Besombes, Jean-Pierre**
**THOMSON-CSF, SCPI, B.P. 32950, rue J.-P.**
**Timbaud**
**F-92402 Courbevoie Cédex (FR)**

(74) Mandataire : **Desperrier, Jean-Louis et al**
**THOMSON-CSF SCPI B.P. 329 50, rue**
**Jean-Pierre Timbaud**
**F-92402 Courbevoie Cédex (FR)**

EP 0 436 431 B1

## Description

L'invention se rapporte aux hydrophones basse fréquence destinés a être utilisés dans des antennes linéaires remorquées, et à des antennes sonar comportant de tels hydrophones.

Les antennes linéaires remorquées, par leur grande longueur, sont utilisées à des fréquences basses, typiquement entre 50Hz et 2000Hz. Elles sont constituées d'un grand nombre d'hydrophones qui doivent avoir une sensibilité élevée, un bruit propre faible, une tenue en pression au delà de 150 bars, un coût faible à cause de leur grand nombre, un encombrement réduit c'est-à-dire des dimensions inférieures à 50mm.

Dans la bande de fréquences comprises entre 50Hz et 2000Hz, la dynamique des bruits est importante. Par exemple le bruit de mer diminue de 30dB entre 50Hz et 1000Hz. Par conséquent un hydrophone est toujours suivi par un filtre passe-haut qui coupe les bruits aux très basses fréquences et par un filtre qui nivelle le bruit de mer, dit filtre de "blanchiement". Cependant, les signaux captés par l'hydrophone sont préalablement amplifiés dans un pré-amplificateur situé en amont des filtres; la dynamique des signaux étant très importante, ce pré -amplificateur généralement sature, et les opérations de filtrage ne sont pas efficaces.

Il est connu de remédier à la saturation du pré-amplificateur par un filtrage préliminaire au niveau de l'hydrophone qui permet de réduire la dynamique des signaux à l'entrée du pré-amplificateur.

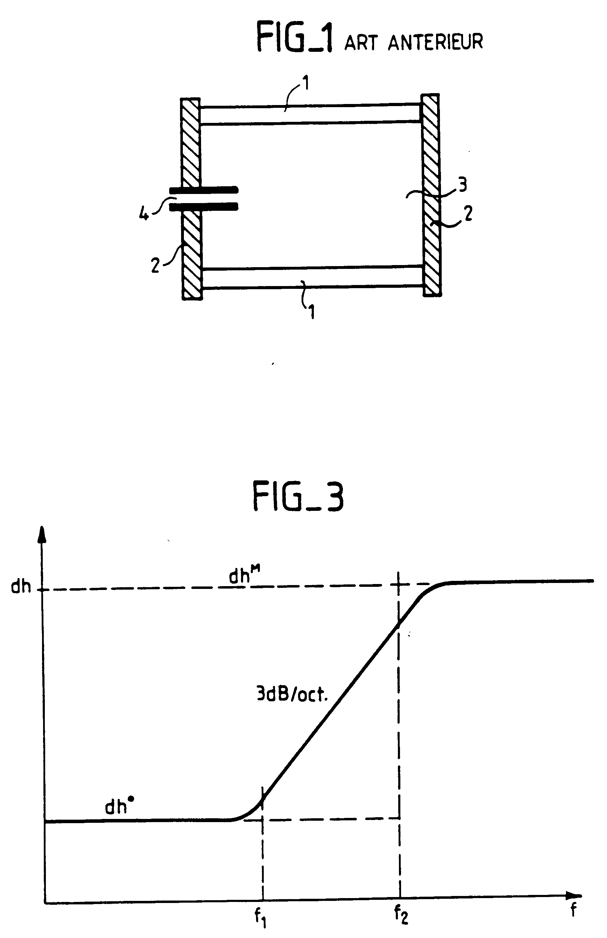

La figure 1 représente un hydrophone à capillaire selon l'art antérieur. Cet hydrophone se compose d'un tube creux 1 en céramique piézoélectrique tel que du PZT, fermé en ses deux extrémités par deux bouchons 2 rigides délimitant ainsi une cavité 3. Cet hydrophone est équilibré en pression grâce à un tube capillaire 4 fixé dans l'un des bouchons et faisant communiquer la cavité intérieure 3 vers l'extérieur de l'hydrophone pour égaliser les variations lentes de pression. Ce capillaire 4 sert également de filtre mécanique et permet de réduire la dynamique des signaux à l'entrée du pré-amplificateur.

Cependant, un hydrophone capillaire est délicat à réaliser, coûteux et de dimension trop importante pour pouvoir être logé dans des antennes linéaires remorquées.

Il est également connu de réaliser des hydrophones très simples avec des céramiques lacunaires sèches qui sont des matériaux très performants. Un tel hydrophone est connu de WO-A-86 05 350.

Une céramique lacunaire est un matériau composite dont une phase est piézoélectrique (haute densité, haute permittivité et haut module de Young) et dont l'autre phase est gazeuse (air). Ces céramiques dites "céramiques lacunaires sèches" sont poreuses et la porosité représente la fraction volumique gazeuse.

Suivant un procédé de fabrication connu il est également possible d'obtenir un matériau à porosité ouverte. Ces céramiques sont caractérisées par une sensibilité hydrostatique accrue par rapport à une céramique compacte et ont une densité plus faible que les céramiques classiques, par exemple une céramique PZT a une densité de l'ordre de 7,3 et une sensibilité hydrostatique de l'ordre de 47 picoCoulombs-/Newton, alors qu'une céramique lacunaire sèche de densité de l'ordre de 4 présente une sensibilité de l'ordre de 186 picoCoulombs/Newton.

Pour réaliser un hydrophone, il suffit de déposer des électrodes sur une céramique lacunaire sèche, de se connecter sur les électrodes et de réaliser un enrobage qui bouche les ouvertures des pores. Cependant, un point faible de ce matériau est sa fragilité, ce qui rend impossible les applications de ce genre d'hydrophone pour les fortes pressions hydrostatiques en très basse fréquence.

L'invention concerne un hydrophone basse fréquence équilibré en pression et se comportant comme un filtre mécanique aux basses fréquences ne comportant pas les inconvénients des hydrophones à capillaire, c'est-à-dire qu'il est simple à réaliser, bon marché et ses dimensions peuvent être adaptées aux antennes linéaires remorquées, en utilisant une céramique lacunaire saturée résistant aux fortes pressions hydrostatiques.

L'hydrophone basse fréquence selon l'invention, est caractérisé en ce qu'il comporte au moins une céramique lacunaire à porosité ouverte saturée par un fluide visqueux, sur laquelle ont été déposées des électrodes.

L'invention concerne également une antenne sonar comportant de tels hydrophones.

D'autres particularités et avantages de l'invention apparaîtront clairement dans la description suivante donnée à titre d'exemple non limitatif et faite en regard des figures annexées qui représentent:

- la figure 1 précitée, un hydrophone à capillaire, selon l'art antérieur;
- la figure 2, une vue en coupe d'une céramique lacunaire sur laquelle ont été déposées des électrodes, selon l'invention;
- la figure 3, la variation de la sensibilité d'une céramique lacunaire saturée en fonction de la fréquence ;
- la figure 4, un hydrophone plaque, selon l'invention.
- la figure 5, un hydrophone disque symétrique à fréquence de coupure basse, selon l'invention;
- la figure 6 , un hydrophone symétrique à fréquence de coupure haute, selon l'invention.

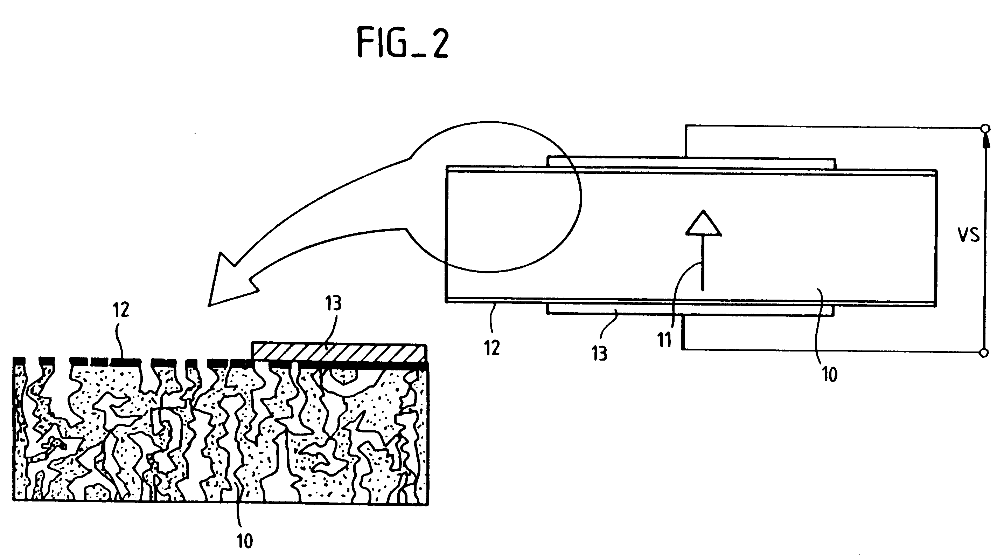

La figure 2 représente une vue en coupe d'une céramique lacunaire à porosité ouverte sur laquelle ont été déposées des électrodes. La céramique lacunaire 10, à porosité ouverte se présente sous forme de disque ou de plaque polarisé selon un axe dit "axe 3". Le sens de polarisation de la céramique est représenté par une flèche, 11. Pendant la fabrication de la céramique, il a été effectué un dépôt d'argenture poreuse, 12, sur les deux faces de la céramique perpendiculaires à l'axe 3 afin de faciliter le dépôt ultérieur de deux électrodes métalliques 13. Ces électrodes 13, obturent une partie des pores de la céramique. Sous l'effet d'une contrainte extérieure, telle qu'une pression, perpendiculaire au plan des électrodes, il apparaît une différence de potentiel VS entre les deux électrodes 13, due à l'apparition de charges d'origine piézoélectrique.

Ces céramiques lacunaires à porosité ouverte ont une bonne tenue à la pression car la porosité ouverte permet à la pression hydrostatique d'équilibrer le matériau et évite les accumulations de contraintes statiques qui conduisent généralement à une dépolarisation du matériau.

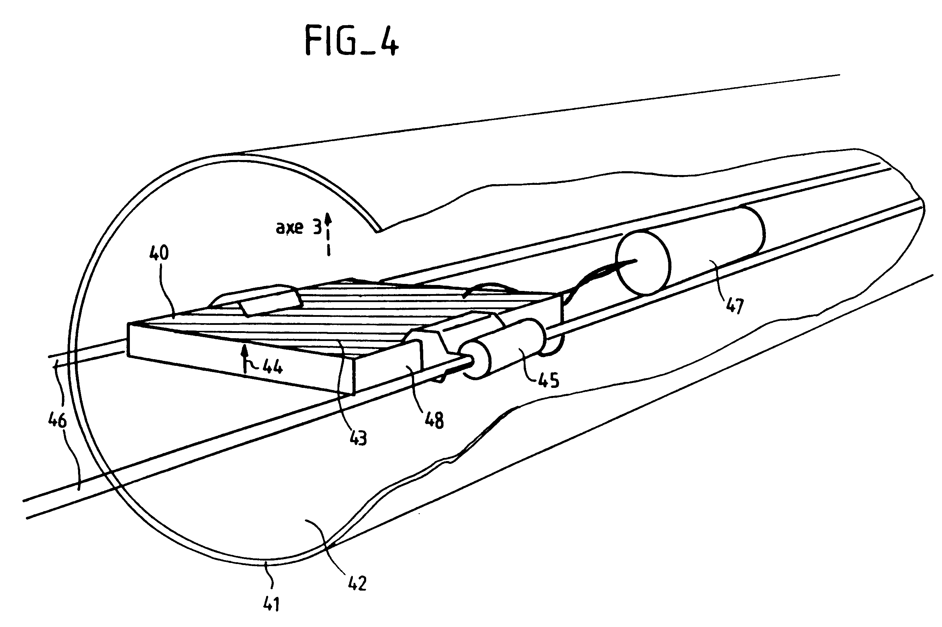

La figure 3 représente la variation de la sensibilité d'une céramique lacunaire saturée en fonction de la fréquence, selon l'invention. La sensibilité hydrostatique dh d'une céramique est un coefficient piézoélectrique qui mesure la charge sur les électrodes pour une sollicitation hydrostatique de 1 Newton. En saturant la céramique lacunaire à porosité ouverte par un fluide visqueux, la sensibilité hydrostatique dh de la céramique devient croissante avec la fréquence de telle sorte que intrinsèquement un hydrophone constitué par une telle céramique se comporte comme un filtre passe-haut car le matériau intègre un capillaire tridimensionnel, aux connexions multiples, constitué par les pores, dans un "squelette", constitué par la partie piézoélectrique de la céramique, qui possède une certaine élasticité. La fréquence de coupure $f_1$ du filtre dépend de la viscosité dynamique du fluide, $\eta$, du module d'élasticité du squelette, s , de la section efficace du capillaire tridimensionnel, $\sigma_c$ , et de la longueur effective du capillaire tridimensionnel, Le. Dans le cas d'une céramique de forme parallélépipédique de dimensions

$$L1, L2, L3, \quad Le^{-2} = L1^{-2} + L2^{-2} + L3^{-2}.$$

Le module de la sensibilité dh d'une céramique lacunaire saturée suit la loi suivante :

$$\left| dh \right| = dh^0 (1 + f^2/f_1^2)^{\frac{1}{2}} \times (1 + f^2/f_2^2)^{-\frac{1}{2}}$$

avec $f_2 = f_1 \times dh^M_{/dh}0$

où $dh^0$ est la sensibilité hydrostatique de la céramique en basse fréquence, $dh^M$ est la sensibilité hydrostatique de la céramique en haute fréquence.

Aux basses fréquences, $f<f_1$, les pores de la céramique lacunaire présentent une faible impédance acoustique et la pression dynamique due à une onde acoustique incidente pénètre dans tous les pores et s'établit sans déphasage dans le volume du matériau. Il y a donc équilibre des pressions entre l'extérieur et l'intérieur de la céramique et la sensibilité de la céramique est faible et égale à $dh^0$

Aux hautes fréquences, $f>f_2$, les pores de la céramique lacunaire présentent une grande impédance acoustique, le squelette de la céramique se comprime et la sensibilité de la céramique lacunaire saturée est élevée et égale à $dh^M$.

Pour les fréquences intermédiaires $f_1<f<f_2$, les deux phénomènes précédents coexistent, il y a compétition entre la pression dynamique qui a tendance à s'équilibrer et le squelette qui se comprime. La sensibilité dh de la céramique lacunaire saturée croît linéairement entre $dh^0$ et $dh^M$ avec une pente voisine de -3dB/octave.

La fréquence de coupure $f_1$ peut être ajustée en obturant plus ou moins la surface de la céramique de façon à diminuer la surface de contact de la céramique avec le fluide visqueux, notamment en modulant la surface des électrodes. Ainsi pour une géométrie donnée, il est possible d'abaisser la fréquence de coupure $f_1$ sans faire varier la viscosité en augmentant la surface des électrodes car $f_1$ est proportionnelle à $\sigma_c/Le^2$ . Dans le cas d'une antenne linéaire remorquée comportant une gaine extérieure étanche et renfermant un fluide visqueux intérieur, ce fluide de remplissage intérieur est utilisé comme fluide visqueux pour saturer la céramique lacunaire. L'hydrophone ainsi obtenu a un coût minimum.

A titre d'exemple numérique il a été réalisé un hydrophone avec une céramique lacunaire en forme de disque de diamètre 36mm et de hauteur 10mm saturée par une huile de viscosité dynamique égale à 30 centiPoises. La densité de la céramique lacunaire est égale à 4 et la porosité à 0,46. La fréquence de coupure $f_1$ est égale à 600 Hz, la dynamique $dh^M/dh^0$ qui ne dépend que du matériau de base et de la porosité, approximativement égale à 10 (20dB).

La figure 4 représente un hydrophone plaque, 40, non symétrique, placé dans une antenne linéaire cylindrique comportant une gaine extérieure étanche, 41, en matériau polyuréthanne par exemple, cette antenne étant remplie d'un fluide visqueux 42.

L'hydrophone, 40, est constitué d'une céramique lacunaire, 48, en forme de plaque, saturée par le fluide visqueux, 42, de remplissage de l'antenne. Sur les deux faces de la céramique parallèles à l'axe longitudinal de l'antenne ont été déposées deux électrodes, 43. L'axe de polarisation, 44, de la céramique, ou axe 3, est perpendiculaire à l'axe longitudinal de l'antenne pour insensibiliser l'hydrophone, 40, aux accélérations transversales de l'antenne. Cet hydrophone, 40, est maintenu en place par deux éléments de fixation et de découplage, 45, eux-mêmes fixés sur deux câbles porteurs, 46, disposés le long de la gaine, 41, et parallèles à l'axe de l'antenne. Cet hydrophone, 40, est relié à un préamplificateur, 47, connecté sur les électrodes, 43.

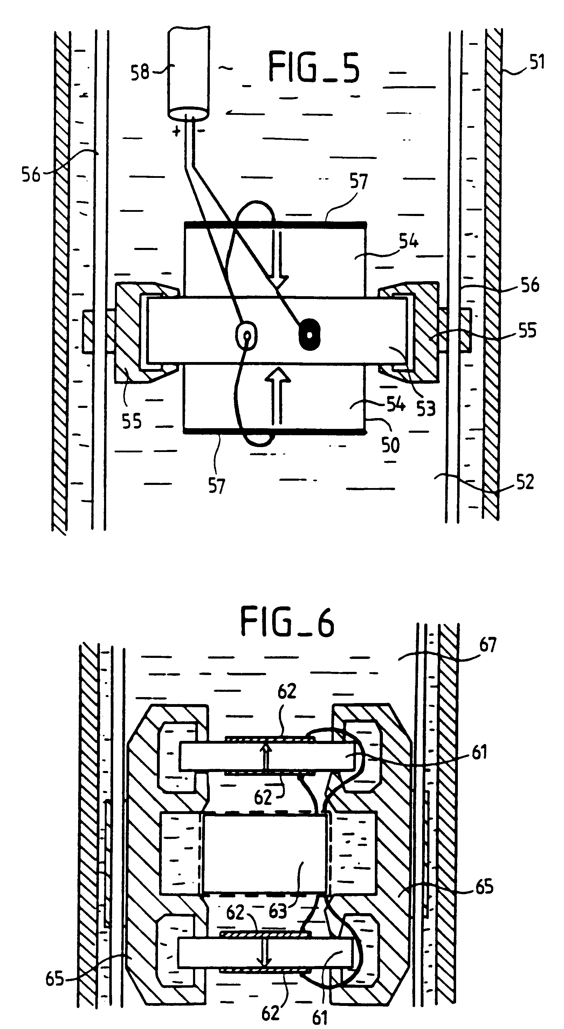

La figure 5 représente une vue en coupe d'un hydrophone symétrique, 50, placé dans une antenne linéaire cylindrique, 51, remplie d'un fluide visqueux, 52. Cet hydrophone, 50, est composé d'un disque métallique central, 53, formant une électrode, de part et d'autre duquel sont fixés deux disques, 54, en céramique lacunaire à porosité ouverte saturée par le fluide de remplissage de l'antenne, tels que l'axe normal aux surfaces des disques 53, 54 est parallèle à l'axe longitudinal de l'antenne. L'hydrophone, 50, est centré dans l'antenne par deux éléments, 55, de centrage et découplage mécanique fixés sur deux câbles porteurs, 56, disposés parallèlement à l'axe longitudinal de l'antenne et symétriquement par rapport à cet axe. La face externe de chacun des deux disques, 54, en céramique lacunaire est complètement recouverte par une électrode, 57, de sorte que la fréquence de coupure $f_1$ est basse. Les disques, 54, en céramique sont polarisés dans une direction parallèle à l'axe de l'antenne linéaire, les sens de polarisation étant dirigés des électrodes extérieures, 57, vers le disque métallique central, 53. Le signal de sortie de l'hydrophone, 50, est amplifié dans un préamplificateur 58.

La figure 6 représente une vue en coupe d'un hydrophone symétrique placé dans une antenne linéaire cylindrique remplie d'un fluide visqueux, 67. Cet hydrophone comprend deux disques 61 distincts en céramique lacunaire à porosité ouverte saturée par le fluide de remplissage de l'antenne et tels que sur les faces de chacun de ces disques 61 sont déposées deux électrodes 62 de faible longueur. Ces disques, 61, sont tels que l'axe normal à leurs surfaces est parallèle à l'axe longitudinal de l'antenne et sont polarisés dans une direction parallèle à l'axe de l'antenne, les sens de polarisation étant opposés. Les 4 électrodes 62 sont connectées à un préamplificateur 63 recouvert par un treillis métallique 64 formant cage de Faraday et disposé entre les deux disques 61 en céramique lacunaire. Deux éléments 65 de centrage et de découplage mécanique maintiennent les disques 61 en céramique et le préamplificateur 63 en place dans l'antenne. Dans cet hydrophone, la surface des céramiques lacunaires en contact avec le fluide visqueux est optimisée et les électrodes, 62, ont une surface aussi faible que possible de façon à ce que la fréquence de coupure $f_1$ soit haute.

D'autres réalisations peuvent être envisagées, notamment des hydrophones à géométrie tubulaire et à polarisation radiale, peuvent aussi être réalisés.

Dans le cas où la fréquence de coupure est ajustée à une valeur élevée c'est-à-dire lorsque les électrodes ont une surface faible l'hydrophone est rendu résistant aux explosions sous-marines.

L'invention n'est pas limitée aux exemples de réalisation précisément décrits; notamment, la réalisation d'un hydrophone avec une céramique lacunaire saturée par le fluide visqueux de remplissage de l'antenne linéaire permet d'obtenir un hydrophone à coût minimum et particulièrement simple, mais tout autre fluide visqueux différent du fluide de remplissage peut être utilisé pour saturer la céramique lacunaire.

D'autres applications peuvent être envisagées : dans les sonars passifs pour lesquels la bande fréquence d'écoute pose des problèmes de saturation et de "blanchiement" de bruit de mer, les hydrophones décrits ci-dessus peuvent être utilisés.

**Revendications**

1. Hydrophone basse fréquence pour antenne sonar, comportant au moins une céramique lacunaire (10) à porosité ouverte saturée par un fluide visqueux, sur laquelle ont été déposées des électrodes métalliques (13).

2. Hydrophone basse fréquence selon la revendication 1, caractérisé en ce que la céramique lacunaire (10) est polarisée perpendiculairement au plan des électrodes (13).

3. Hydrophone basse fréquence selon la revendication 2, caractérisé en ce qu'il constitue un filtre de type passe-haut dont la fréquence de coupure basse ($f_1$) est ajustée en obturant des parties de surface de la céramique plus ou moins importantes.

4. Hydrophone basse fréquence selon la revendication 3, caractérisé en ce que l'obturation plus ou moins importante des parties de surface de la céramique est obtenue en modulant la surface des électrodes (13).

5. Hydrophone basse fréquence selon la revendication 3, caractérisé en ce qu'il comporte un disque métallique central (53) constituant une électrode, de part et d'autre duquel sont fixés deux disques (54) en céramique lacunaire à porosité ouverte saturée par un fluide visqueux, la face externe de chacun des disques (54) étant complètement recouverte par une électrode de sorte que la fréquence de coupure ($f_1$) est basse.

6. Hydrophone basse fréquence selon la revendication 3, caractérisé en ce qu'il comporte deux disques (61) distincts en céramique lacunaire à porosité ouverte saturée par un fluide visqueux, tels que sur les faces de chacun de ces disques (61) sont déposées deux électrodes (62) de faible longueur de sorte que la fréquence de coupure ($f_1$) est haute.

7. Antenne linéaire comportant des hydrophones basse fréquence selon l'une des revendications précédentes, ces hydrophones étant disposés à l'intérieur d'une gaine étanche remplie d'un fluide visqueux, caractérisé en ce que le fluide visqueux utilisé pour saturer les céramiques lacunaires (10) des hydrophones est le fluide de remplissage de l'antenne.

## Patentansprüche

1. Niederfrequenz-Hydrophon für eine Sonarantenne mit mindestens einer Leerstellen-Keramik (10), die eine offene Porosität besitzt, mit einem viskosen Fluid gesättigt ist und auf die metallische Elektroden (13) aufgebracht sind.

2. Niederfrequenz-Hydrophon nach Anspruch 1, dadurch gekennzeichnet, daß die Leerstellen-Keramik (10) senkrecht zur Ebene der Elektroden (13) polarisiert ist.

3. Niederfrequenz-Hydrophon nach Anspruch 2, dadurch gekennzeichnet, daß es ein Hochpaßfilter bildet, dessen untere Grenzfrequenz $(f_1)$ durch Verschließen von größeren oder kleineren Teilen der Oberfläche der Keramik eingestellt wird.

4. Niederfrequenz-Hydrophon nach Anspruch 3, dadurch gekennzeichnet, daß der Verschluß eines mehr oder weniger großen Teils der Oberfläche der Keramik durch Veränderung der Oberfläche der Elektroden (13) erreicht wird.

5. Niederfrequenz-Hydrophon nach Anspruch 3, dadurch gekennzeichnet, daß es eine zentrale Metallscheibe enthält, die eine Elektrode bildet und zu deren beiden Seiten je eine Scheibe (54) aus Leerstellen-Keramik mit einer durch ein viskoses Fluid gesättigten offenen Porosität befestigt ist, wobei die äußere Oberfläche jeder Scheibe (54) vollständig mit einer Elektrode bedeckt ist, so daß die Grenzfrequenz $(f_1)$ niedrig ist.

6. Niederfrequenz-Hydrophon nach Anspruch 3, dadurch gekennzeichnet, daß es zwei getrennte Scheiben (61) aus Leerstellen-Keramik mit offener Porosität besitzt, die durch ein viskoses Fluid gesättigt ist, wobei auf den beiden Seiten jeder dieser Scheiben (61) Elektroden (62) geringer Länge aufgebracht sind, so daß die Grenzfrequenz $(f_1)$ hoch ist.

7. Lineare Antenne mit Niederfrequenz-Hydrophonen nach einem der vorhergehenden Ansprüche, die im Inneren einer dichten und mit einem viskosen Fluid gefüllten Hülle angeordnet sind, dadurch gekennzeichnet, daß das zum Sättigen der Leerstellen-Keramiken (10) der Hydrophone verwendete viskose Fluid das Füllfluid der Antenne ist.

## Claims

1. Low frequency hydrophone for sonar antenna, including at least one open-porosity lacunar ceramic (10) saturated by a viscous fluid, and on which have been deposited metal electrodes (13).

2. Low frequency hydrophone according to Claim 1, characterized in that the lacunar ceramic (10) is polarized perpendicularly to the plane of the electrodes (13).

3. Low frequency hydrophone according to Claim 2, characterized in that it constitutes a filter of high-pass type whose low cutoff frequency $(f_1)$ is adjusted by obstructing greater or lesser surface portions of the ceramic.

4. Low frequency hydrophone according to Claim 3, characterized in that the greater or lesser obstructing of the surface portions of the ceramic is achieved by modulating the surface area of the electrodes (13).

5. Low frequency hydrophone according to Claim 3, characterized in that it includes a central metal disc (53) constituting an electrode, on either side of which are fixed two discs (54) of open-porosity lacunar ceramic saturated by a viscous fluid, the external face of each of the discs (54) being completely covered by an electrode so that the cutoff frequency $(f_1)$ is low.

6. Low frequency hydrophone according to Claim 3, characterized in that it includes two separate discs (61) of open-porosity lacunar ceramic saturated by a viscous fluid, and which are such that two electrodes (62) of small length are deposited on the faces of each of these discs (61) so that the cutoff frequency $(f_1)$ is high.

7. Linear antenna including low frequency hydrophones according to one of the preceding claims, these hydrophones being arranged inside a sealed sheath filled with a viscous fluid, characterized in that the viscous fluid used to saturate the lacunar ceramics (10) of the hydrophones is the fluid for filling the antenna.

## FIG_1 ART ANTERIEUR

## FIG_3

# FIG_2

EP 0 436 431 B1

FIG_4

axe 3

40

46

44

43

48

45

47

42

41

EP 0 436 431 B1

8

EP 0 436 431 B1

FIG_5

FIG_6